# FASCICULE DE BREVET EUROPEEN

(11) **EP 3 811 273 B1**
(45) Date de publication et mention de la délivrance du brevet: **27.07.2022**
(21) Numéro de dépôt: 19730831.5
(22) Date de dépôt: 19.06.2019
(51) Int. Cl.: G06F 21/76, G06F 21/86

(54) **PROCEDE DE PROTECTION D'UN FPGA CONTRE DES RADIATIONS NATURELLES**
VERFAHREN ZUM SCHUTZ EINES FPGA VOR NATÜRLICHEN STRAHLUNGEN
METHOD FOR PROTECTING AN FPGA AGAINST NATURAL RADIATIONS

(30) Priorité: 21.06.2018 FR 1855483
(43) Date de publication de la demande: 28.04.2021
(73) Titulaire: Safran Electronics & Defense, 75015 Paris (FR)
(72) Inventeur: AUTIE, Cédric, 77550 MOISSY-CRAMAYEL (FR); PORTEBOEUF, Thibault, 77550 MOISSY-CRAMAYEL (FR)
(74) Mandataire: Lavaud, Thomas
(86) Numéro de dépôt international: PCT/EP2019/066305
(87) Numéro de publication internationale: WO 2019/243479

(56) Documents cités:
- CN-B- 103 500 125
- US-B1- 9 054 684
- US-B1- 9 484 919

## Description

L'invention concerne le domaine des procédés de protection d'un FPGA contre des radiations naturelles.

### ARRIERE PLAN DE L'INVENTION

Dans l'espace, un FPGA (pour *Field-Programmable Gate Array)* est soumis à un environnement radiatif spatial résultant de plusieurs phénomènes parmi lesquels on trouve le rayonnement cosmique, les éruptions solaires et le vent solaire.

De même, dans l'atmosphère, un FPGA est soumis à un environnement radiatif atmosphérique résultant notamment de l'interaction du rayonnement cosmique avec les atomes de l'atmosphère.

Un tel FPGA est donc exposé à des ions lourds et à des protons résultant de radiations naturelles.

Il est possible que ces particules perturbent le FPGA et, notamment, produisent des *Single Event Upsets* (SEUs) sur les bascules *flip-flop* du FPGA. Les valeurs binaires des données précédemment échantillonnées par les bascules *flip-flop* sont alors inversées.

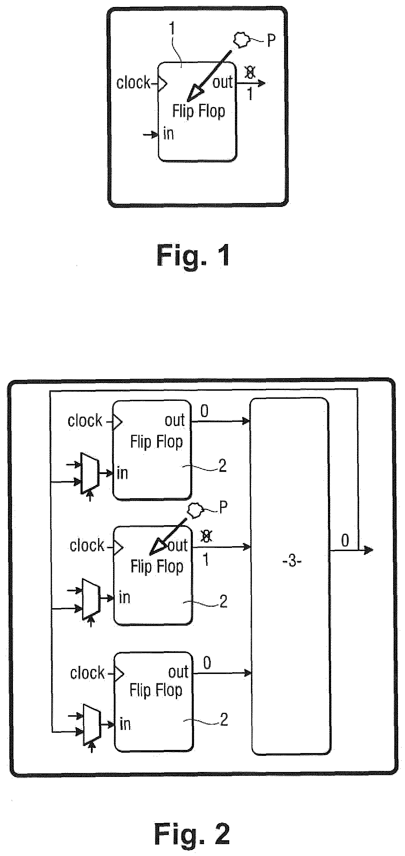

On voit ainsi sur la figure 1 une particule P qui provoque une inversion de la sortie d'une bascule flip-*flop* 1 : la sortie est à 1 au lieu d'être à 0.

En référence à la figure 2, un moyen existant pour corriger ce type de perturbation consiste à tripliquer les bascules 2 sensibles, et à associer aux trois bascules 2 tripliquées un voteur majoritaire 3. On corrige les entrées des bascules 2 à partir du résultat du vote réalisé par le voteur 3. On parle alors de *Local Triple Modular Redundancy,* ou de redondance triple modulaire locale. Ce mécanisme fonctionne très bien à condition qu'une seule bascule 2 sur les trois bascules 2 soit en erreur.

On appelle dans la suite de ce document « cellule TMR » une cellule de redondance triple modulaire comprenant un ensemble de trois bascules 2 tripliquées et d'un voteur 3.

Dans le cadre d'un projet de développement visant à mettre en œuvre une Unité de Mesure Inertielle d'un lanceur spatial, un FPGA a été exposé à un environnement d'ions lourds et de protons par l'utilisation d'un accélérateur de particules. On a constaté que l'utilisation de la TMR permet de diviser seulement par deux les erreurs par rapport à l'utilisation de bascules non tripliquées. Cette amélioration est insuffisante au vu des exigences incluses dans les spécifications techniques associées à l'Unité de Mesure Inertielle.

Après analyse, on a constaté que l'outil de placement routage utilisé pour réaliser le placement et le routage du FPGA avait tendance à « coller » les trois bascules d'une même cellule TMR dans une optique d'optimisation des timings. On a aussi constaté que les particules auxquelles a été soumis le FPGA sont chacune susceptibles de perturber une zone de surface supérieure à la surface occupée par une unique bascule. Une même particule peut donc toucher deux bascules d'une même cellule TMR et corrompre son fonctionnement. On parle ici de *Multiple Bit Upsets* (MBU). US9484919 divulgue un outil de routage.

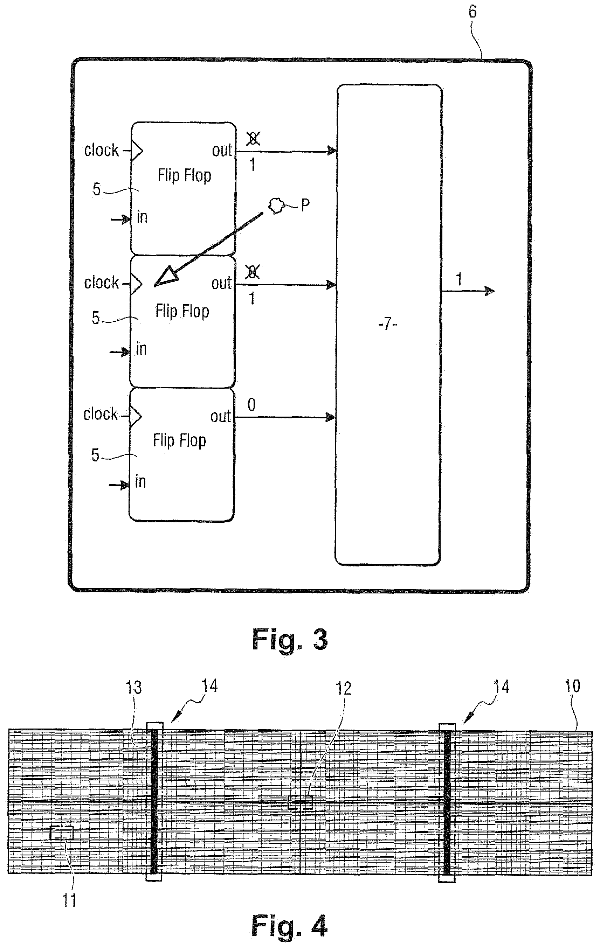

Ainsi, sur la figure 3, on constate que, comme l'état des sorties de deux des bascules 5 de la cellule TMR 6 est inversé, le voteur 7 n'est pas capable de corriger efficacement les effets de la particule P.

Une première solution pour pallier ce problème consisterait à utiliser une technologie de FPGA présentant une finesse de gravure plus large. Plus la gravure est large et plus les bascules sont naturellement éloignées les unes des autres, avec pour effet une diminution de leur sensibilité aux MBU lors de l'utilisation de la TMR. Malheureusement, plus la gravure est large et moins le FPGA est rapide. Les besoins en calcul et en bande passante de l'Unité de Mesure Inertielle ne permettent pas l'utilisation de cette solution.

Une deuxième solution consisterait à prendre chaque sous-module du FPGA et à tripliquer individuellement chaque sous-module, tout en s'assurant que les trois instances d'un même sous-module sont bien physiquement séparées. Un voteur peut alors discriminer l'une des trois instances en effectuant un vote sur les trois résultats. Néanmoins, cette solution présente de nombreux inconvénients. Tout d'abord, elle nécessite une très grande quantité de logique puisque l'ensemble des sous-modules sont tripliqués (dans la TMR de bascules, seules les bascules sont tripliquées, pas la partie combinatoire). Par conséquent, il peut s'avérer nécessaire de partitionner cette solution sur plusieurs FPGAs, ou tout du moins sur un nombre plus important de FPGAs. De plus, cette solution présente des limites lors de calculs récursifs. En effet, si une première instance du sous-module présente une défaillance, il n'est alors pas possible de corriger cette défaillance, à moins de recharger le contexte complet du sous-module à partir du contexte de l'une des deux autres instances, ce qui est techniquement compliqué. Ainsi, si une deuxième instance du sous-module présente également une défaillance après que la première instance ait défailli, le voteur ne peut plus faire de correction et le sous-module complet est alors déclaré hors-fonctionnement.

Une troisième solution consisterait à prendre chaque sous-module du FPGA et à dupliquer individuellement chaque sous-module, tout en s'assurant que les deux instances d'un même sous-module sont bien physiquement séparées. Ensuite, un comparateur peut déterminer si les deux instances fournissent le même résultat, indiquant ainsi un bon fonctionnement. Dans le cas contraire, il n'est pas possible d'identifier l'instance défaillante et il devient nécessaire de relancer le ou les calculs. L'avantage de cette solution est qu'elle nécessite moins de ressources par rapport à une triplication des sous-modules (voir la deuxième solution). Cependant, cette troisième solution implique une complexité plus importante. De plus, elle nécessite de dupliquer toute la partie combinatoire contrairement à une TMR de bascules qui ne triplique que les bascules (en général, le *design* d'un FPGA utilise beaucoup plus de logique combinatoire que de bascules). Enfin, cette troisième solution est problématique lors de calculs récursifs, car l'erreur d'un sous-module va s'accumuler dans le temps.

Une quatrième solution consisterait à tripliquer l'ensemble des bascules, à utiliser un voteur avec retour pour corriger la bascule défaillante, et à positionner « à la main » toutes les bascules. Les bascules sont alors suffisamment espacées afin de se prémunir de l'effet MBU. C'est une solution intéressante car elle permet, avec l'utilisation de ressources réduites, de se prémunir des MBU et surtout d'avoir une correction à chaque coup d'horloge de la bascule défaillante. Ainsi, il est tout à fait possible d'effectuer des calculs récursifs là où les solutions à base de duplication ou de triplication de sous-modules, telles que détaillées précédemment, présentent des limites. Par contre, le positionnement manuel des bascules est un travail très long et fastidieux qui nécessite de multiples itérations afin d'atteindre les *timings* souhaités, mais surtout qui demande à être refait en partie ou complètement lorsque le *design* évolue. C'est donc une solution en théorie intéressante mais en réalité non pérenne et très risquée.

Une cinquième solution consisterait à utiliser un FPGA « durci », c'est-à-dire résistant aux radiations naturelles. Cette solution parait en théorie très intéressante puisque ces composants peuvent avoir des TMR de bascules directement dans leur silicium. Cependant, un tel FPGA présente un coût récurrent extrêmement élevé.

### OBJET DE L'INVENTION

L'invention a pour objet un procédé de protection d'un FPGA contre des radiations naturelles, qui ne diminue pas les performances du FPGA, qui soit efficace, simple à mettre en œuvre et peu coûteux.

### RESUME DE L'INVENTION

En vue de la réalisation de ce but, on propose un procédé de protection d'un FPGA contre des radiations naturelles, le FPGA présentant une surface divisée en plusieurs zones, le procédé de protection comprenant les étapes de :
- définir au moins une catégorie de signaux contraignants, la catégorie de signaux contraignants étant définie pour qu'un outil de placement routage prédéterminé ne puisse router plus d'un nombre maximal déterminé de signaux contraignants différents vers chaque zone de la surface du FPGA ;
- répliquer un module logique initial pour obtenir une pluralité de modules logiques répliqués formant une cellule logique répliquée ;
- associer des signaux contraignants aux modules logiques répliqués, de sorte que le nombre de signaux contraignants associés à la cellule logique répliquée soit supérieur au nombre maximal déterminé pour forcer l'outil de placement routage à placer les modules logiques répliqués de la cellule logique répliquée dans des zones distinctes de la surface du FPGA.

Grâce au procédé de protection selon l'invention, les modules logiques répliqués (par exemple des bascules *flip-flop)* de la cellule logique répliquée (par exemple une cellule TMR) sont placés automatiquement par l'outil de placement routage dans des zones distinctes du FPGA. Les modules logiques répliqués d'une même cellule logique répliquée sont ainsi espacés, ce qui permet de réduire le risque de survenue d'un MBU.

On protège donc efficacement le FPGA contre les radiations naturelles sans diminuer ses performances et de manière simple et peu coûteuse.

On propose aussi un FPGA dans lequel est mis en œuvre le procédé de protection qui vient d'être décrit.

On propose en outre une carte électrique sur laquelle est monté ledit FPGA.

On propose aussi une Unité de Mesure Inertielle comportant une carte électrique telle que celle décrite plus tôt.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
- la figure 1 représente une bascule *flip-flop ;*
- la figure 2 représente une cellule TMR subissant un SEU ;
- la figure 3 représente une cellule TMR subissant un MBU ;
- la figure 4 représente des *buffers* globaux de rangée et des groupes logiques ;
- les figures 5 et 6 illustrent des étapes du procédé de protection selon l'invention ;
- la figure 7 représente une couche logique d'un FPGA.

### DESCRIPTION DETAILLEE DE L'INVENTION

L'invention est ici mise en œuvre dans un FPGA de la famille *IGLOO2* fabriqué par le fabricant de composants *Microsemi.* Le FPGA est fabriqué avec une finesse de gravure de 65nm. L'outil utilisé pour le placement routage du FPGA est un outil de placement routage de la famille *Libero.*

En référence à la figure 4, la couche logique 10 du FPGA, formée sur silicium, présente une surface qui est divisée en de nombreuses zones. Chaque zone est ici définie comme comportant un groupe logique 11 (ou *cluster).* Chaque groupe logique 11 comprend ici douze bascules *flip-flop,* douze tables de correspondance (ou LUT, pour *Look-Up Table)* et douze *buffers.*

La couche logique 10 du FPGA comprend aussi des ressources de routage, parmi lesquelles on trouve des ressources de routage de signaux globaux. Les signaux globaux comprennent ici des signaux d'horloge et des signaux de *reset.*

Les ressources de routage de signaux globaux comprennent des *buffers* globaux 12 *(Global Buffer)* et des *buffers* globaux de rangée 13 (ou *Row Global Buffer).*

Les *buffers* globaux 12 sont ici au nombre de 8 (leur nombre dépend de la taille du FPGA, certains FPGAs de la même famille en ont 16). Chaque *buffer* global 12 est un multiplexeur qui génère un signal global indépendant. Il peut être piloté à partir de plusieurs sources, par exemple depuis une horloge externe ou un signal logique interne.

Les *buffers* globaux de rangée 13 sont situés sur deux bandeaux verticaux 14 à l'intérieur du FPGA. Chaque *buffer* global de rangée 13 pilote les groupes logiques 11 situés sur une branche de gauche et une branche de droite du *buffer* global de rangée 13.

Au moment du routage du FPGA, les signaux globaux provenant des *buffers* globaux 12 sont routés vers les *buffers* globaux de rangée 13. Les signaux globaux atteignent alors les groupes logiques 11 par l'intermédiaire de signaux globaux de rangée issus des *buffers* globaux de rangée 13.

Chaque *buffer* global 12 a accès à tous les *buffers* globaux de rangée 13. Chaque *buffer* global de rangée 13 est indépendant et peut aussi être piloté par des signaux logiques internes.

Les groupes logiques 11 peuvent par ailleurs être pilotés par des signaux logiques internes dits « *inter clusters* », qui ne sont pas des signaux globaux.

De manière classique, lorsqu'une TMR de bascules est utilisée, l'outil de placement routage tente de positionner au plus proche les bascules d'une même cellule TMR afin d'obtenir des temps de propagation les plus courts possibles.

Ainsi, dans une cellule TMR, un signal d'horloge commun aux trois bascules est routé depuis un même *buffer* global 12 vers les *buffers* globaux de rangée 13, puis les bascules de la cellule TMR sont positionnées dans un même groupe logique 11 afin de router le signal d'horloge depuis un même *buffer* global de rangée 13, et donc afin de simplifier la logique d'interconnexion avec le voteur associé à la cellule TMR.

Il en va de même pour le signal de *reset* qui provient d'un même *buffer* global 12 puis qui est routé vers les *buffers* globaux de rangée 13. Ainsi, un groupe logique 11 contenant les trois bascules la cellule TMR sera connecté à un *buffer* global de rangée 13 qui lui-même produira le signal d'horloge et le signal de *reset* communs aux trois bascules, ces deux signaux globaux provenant directement de deux *buffers* globaux 12 dédiés.

Cependant, il est impossible de router, à l'aide de l'outil de placement routage, plus de trois signaux globaux vers un même groupe logique 11 depuis un même *buffer* global de rangée 13.

Si chaque bascule d'une même cellule TMR utilise deux signaux globaux tous deux distincts des signaux globaux des autres bascules de la cellule TMR, il n'est plus possible physiquement de positionner les bascules de la cellule TMR dans un même groupe logique 11, et les bascules sont alors naturellement espacées dans des groupes logiques 11 différents, et donc dans des zones différentes de la surface du FPGA.

Ainsi, si chaque bascule d'une même cellule TMR utilise un signal d'horloge distinct, c'est-à-dire différent de celui des deux autres bascules de la cellule TMR, et un signal de *reset* distinct, c'est-à-dire différent de celui des deux autres bascules de la cellule TMR, on obtient six signaux globaux par cellule TMR. Comme ces six signaux globaux sont transmis par six signaux globaux de rangée différents, les trois bascules de la cellule TMR sont positionnées dans des groupes logiques 11 différents et donc espacés.

Cet espacement réduit le risque de MBU : on protège ainsi efficacement le FPGA contre les radiations naturelles.

On diminue en outre la sensibilité des bascules aux SET *(Single-Event Transients)* sur les signaux d'horloge qui sont désormais tripliqués.

On récapitule maintenant la mise en œuvre du procédé de protection selon l'invention.

Le procédé de protection selon l'invention consiste tout d'abord à définir au moins une catégorie de signaux contraignants, la catégorie de signaux contraignants étant définie pour qu'un outil de placement routage prédéterminé ne puisse router plus d'un nombre maximal déterminé de signaux contraignants différents vers chaque zone de la surface du FPGA.

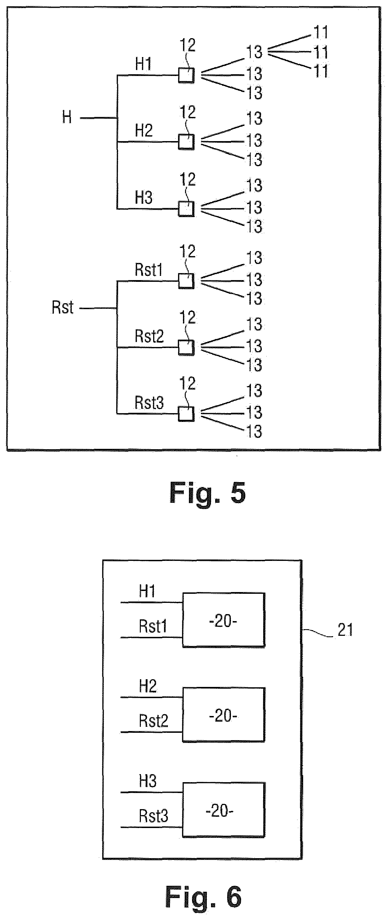

Ici, en l'occurrence, en référence à la figure 5, on définit deux catégories de signaux contraignants : une première catégorie de signaux contraignants qui comprend des signaux d'horloge H, et une deuxième catégorie de signaux contraignants qui comprend des signaux de *reset* Rst.

La première catégorie comprend un premier signal d'horloge H1, un deuxième signal d'horloge H2 et un troisième signal d'horloge H3.

La deuxième catégorie comprend un premier signal de *reset* Rst1, un deuxième signal de *reset* Rst2 et un troisième signal de *reset* Rst3.

Il est ici impossible de router plus de trois signaux globaux (c'est-à-dire, plus de trois signaux parmi des signaux d'horloge et des signaux de *reset*) vers un même groupe logique 11 (ou *cluster),* donc vers chaque zone de la surface du FPGA (car chaque zone de la surface du FPGA comprend un groupe logique 11). Le nombre maximal déterminé est donc égal à trois.

Puis, le procédé de protection consiste à répliquer un module logique initial pour obtenir une pluralité de modules logiques répliqués formant une cellule logique répliquée.

Ici, en l'occurrence, en référence à la figure 6, le module logique initial est une bascule *flip-flop* 20, la réplication est une triplication, et la cellule logique répliquée est une cellule TMR 21.

Ensuite, le procédé de protection consiste à associer des signaux contraignants aux modules logiques répliqués, de sorte que le nombre de signaux contraignants associés à la cellule logique répliquée soit supérieur au nombre maximal déterminé pour forcer l'outil de placement routage à placer les modules logiques répliqués de la cellule logique répliquée dans des zones distinctes de la surface du FPGA.

En l'occurrence, on associe ici à chaque bascule 20 un signal d'horloge distinct et un signal *reset* distinct, soit deux signaux contraignants par bascule et donc six signaux contraignants par cellule TMR : les bascules 20 tripliquées de la cellule TMR 21 sont placées par l'outil de placement routage dans des zones distinctes de la surface du FPGA.

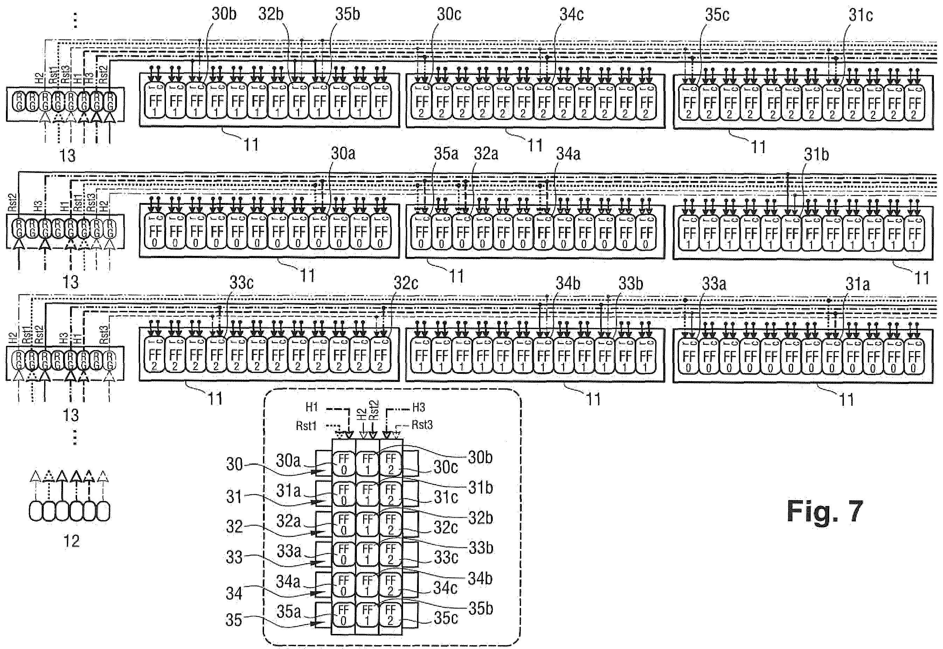

En référence à la figure 7, on met en œuvre le procédé de protection selon l'invention avec six cellules TMR.

La cellule TMR 30 comprend la bascule 30a, la bascule 30b et la bascule 30c. On associe à la bascule 30a le premier signal d'horloge H1 et le premier signal de *reset* Rst1. On associe à la bascule 30b le deuxième signal d'horloge H2 et le deuxième signal de *reset* Rst2. On associe à la bascule 30c le troisième signal d'horloge H3 et le troisième signal de *reset* Rst3.

La cellule TMR 31 comprend la bascule 31a, la bascule 31b et la bascule 31c. On associe à la bascule 31a le premier signal d'horloge H1 et le premier signal de *reset* Rst1. On associe à la bascule 31b le deuxième signal d'horloge H2 et le deuxième signal de *reset* Rst2. On associe à la bascule 31c le troisième signal d'horloge H3 et le troisième signal de *reset* Rst3.

La cellule TMR 32 comprend la bascule 32a, la bascule 32b et la bascule 32c. On associe à la bascule 32a le premier signal d'horloge H1 et le premier signal de *reset* Rst1. On associe à la bascule 32b le deuxième signal d'horloge H2 et le deuxième signal de *reset* Rst2. On associe à la bascule 32c le troisième signal d'horloge H3 et le troisième signal de *reset* Rst3.

La cellule TMR 33 comprend la bascule 33a, la bascule 33b et la bascule 33c. On associe à la bascule 33a le premier signal d'horloge H1 et le premier signal de *reset* Rst1. On associe à la bascule 33b le deuxième signal d'horloge H2 et le deuxième signal de *reset* Rst2. On associe à la bascule 33c le troisième signal d'horloge H3 et le troisième signal de *reset* Rst3.

La cellule TMR 34 comprend la bascule 34a, la bascule 34b et la bascule 34c. On associe à la bascule 34a le premier signal d'horloge H1 et le premier signal de *reset* Rst1. On associe à la bascule 34b le deuxième signal d'horloge H2 et le deuxième signal de *reset* Rst2. On associe à la bascule 34c le troisième signal d'horloge H3 et le troisième signal de *reset* Rst3.

La cellule TMR 35 comprend la bascule 35a, la bascule 35b et la bascule 35c. On associe à la bascule 35a le premier signal d'horloge H1 et le premier signal de *reset* Rst1. On associe à la bascule 35b le deuxième signal d'horloge H2 et le deuxième signal de *reset* Rst2. On associe à la bascule 35c le troisième signal d'horloge H3 et le troisième signal de *reset* Rst3.

On voit que les bascules d'une même cellule TMR sont placées dans des groupes logiques distincts, c'est-à-dire dans des zones distinctes de la surface du FPGA.

Bien entendu, l'invention n'est pas limitée au mode de réalisation décrit mais englobe toute variante entrant dans le champ de l'invention telle que définie par les revendications.

Le FPGA et l'outil de placement routage peuvent bien sûr être différents de ceux décrits ici. Le nombre et le type de signaux contraignants utilisés pourraient eux aussi être différents.

La réplication mise en œuvre n'est pas nécessairement une triplication : il est possible de répliquer chaque module logique initial un nombre de fois différent de trois.

## Revendications

1. Procédé de protection d'un FPGA contre des radiations naturelles (P), le FPGA présentant une surface divisée en plusieurs zones, le procédé de protection comprenant les étapes de :
- définir au moins une catégorie de signaux contraignants (H, Rst), la catégorie de signaux contraignants étant définie pour qu'un outil de placement routage prédéterminé ne puisse router plus d'un nombre maximal déterminé de signaux contraignants différents (H1, H2, H3, Rst1, Rst2, Rst3) vers chaque zone de la surface du FPGA ;
- répliquer un module logique initial pour obtenir une pluralité de modules logiques répliqués (20, 30a, 30b, 30c, ..., 35a, 35b, 35c) formant une cellule logique répliquée (21, 30,..., 35) ;
- associer des signaux contraignants aux modules logiques répliqués, de sorte que le nombre de signaux contraignants associés à la cellule logique répliquée soit supérieur au nombre maximal déterminé pour forcer l'outil de placement routage à placer les modules logiques répliqués de la cellule logique répliquée dans des zones distinctes de la surface du FPGA.

2. Procédé de protection selon la revendication 1, dans lequel le module logique initial est une bascule *flip-flop* et la cellule logique répliquée est une cellule de redondance triple modulaire.

3. Procédé de protection selon l'une des revendications précédentes, dans lequel on définit une première catégorie de signaux contraignants qui comprend des signaux d'horloge (H1, H2, H3).

4. Procédé de protection selon l'une des revendications précédentes, dans lequel on définit une deuxième catégorie de signaux contraignants qui comprend des signaux de *reset* (Rst1, Rst2, RSt3).

5. Procédé de protection selon les revendications 3 et 4, dans lequel on associe un signal d'horloge et un signal de *reset* distincts à chaque module logique répliqué.

6. FPGA dans lequel est mis en œuvre un procédé de protection selon l'une des revendications précédentes.

7. FPGA selon la revendication 6, le FPGA comprenant des *buffers* globaux (12), des *buffers* globaux de rangée (13), et des groupes logiques (11), chaque zone de la surface du FPGA comprenant un groupe logique, le FPGA étant agencé de sorte que des signaux globaux provenant des *buffers* globaux (12) sont routés vers les *buffers* globaux de rangée (13), les signaux globaux atteignant les groupes logiques (11) par l'intermédiaire de signaux globaux de rangée issus des *buffers* globaux de rangée (13).

8. Carte électrique sur laquelle est monté un FPGA selon l'une des revendications 6 ou 7.

9. Unité de mesure inertielle comportant une carte électrique selon la revendication 8.

## Patentansprüche

1. Verfahren zum Schutz eines FPGA vor natürlichen Strahlungen (P), wobei das FPGA eine Oberfläche aufweist, die in mehrere Zonen unterteilt ist, wobei das Schutzverfahren die Schritte umfasst:
- Definieren mindestens einer Kategorie von Zwangssignalen (H, Rst), wobei die Kategorie von Zwangssignalen definiert ist, damit ein Werkzeug für vorbestimmtes Platzieren und Routing nicht mehr als eine vorbestimmte maximale Anzahl von unterschiedlichen Zwangssignalen (H1, H2, H3, Rst1, Rst2, Rs3) zu jeder Zone der Oberfläche des FPGA routen kann;
- Replizieren eines initialen logischen Moduls, um eine Vielzahl von replizierten logischen Modulen (20, 30a, 30b, 30c, ..., 35a, 35b, 35c) zu erhalten, die eine replizierte logische Zelle (21, 30, ..., 35) bilden;
- Zuordnen der Zwangssignale zu den replizierten logischen Modulen, derart, dass die Anzahl der der replizierten logischen Zelle zugeordneten Zwangssingale größer als die vorbestimmte maximale Anzahl ist, um das Werkzeug für Platzierung und Routing zu zwingen, die replizierten logischen Module der replizierten logischen Zelle in unterschiedlichen Zonen der Oberfläche des FPGA zu platzieren.

2. Schutzverfahren nach Anspruch 1, bei dem das initiale logische Modul eine bistabile Kippschaltung und die replizierte logische Zelle eine dreifache modulare Redundanzzelle ist.

3. Schutzverfahren nach einem der vorhergehenden Ansprüche, bei der man eine erste Kategorie von Zwangssignalen definiert, die Taktsignale (H1, H2, H3) umfasst.

4. Schutzverfahren nach einem der vorhergehenden Ansprüche, bei dem man eine zweite Kategorie von Zwangssignalen definiert, die Reset-Signale (Rst1, Rst2, Rst3) umfasst.

5. Schutzverfahren nach den Ansprüchen 3 und 4, bei dem ein separates Taktsignal und ein separates Reset-Signal jedem replizierten logischen Modul zugeordnet sind.

6. FPGA, in dem ein Schutzverfahren nach einem der vorhergehenden Ansprüche durchgeführt wird.

7. FPGA nach Anspruch 6, wobei das FPGA globale Puffer (12), Reihen-Global-Puffer (13) und logische Gruppen (11) umfasst, wobei jede Zone der Oberfläche des FPGA eine logische Gruppe umfasst, wobei der FPGA derart ausgebildet ist, dass die globalen Signale, die aus den globalen Puffern (12) stammen, zu den Reihen-Global-Puffern (13) geroutet werden, wobei die globalen Signale die logischen Gruppen (11) über Reihen-Global-Signale erreichen, die aus den Reihen-Global-Puffern (13) stammen.

8. Leiterplatte, auf der ein FPGA nach einem der Ansprüche 6 oder 7 montiert ist.

9. Inertiale Messeinheit, umfassend eine Leiterplatte nach Anspruch 8.

## Claims

1. A protection method for protecting an FPGA against natural radiation (P), the FPGA presenting a surface subdivided into a plurality of zones, and the protection method comprising the steps of:
• defining at least one category of constraining signals (H, Rst), the category of constraining signals being defined so that a predetermined placement and routing tool cannot route more than a determined maximum number of different constraining signals (H1, H2, H3, Rst1, Rst2, Rst3) to any one zone of the surface of the FPGA;
• replicating an initial logic module in order to obtain a plurality of replicated logic modules (20, 30a, 30b, 30c, ..., 35a, 35b, 35c) forming a replicated logic cell (21, 30, ..., 35); and
• associating constraining signals with the replicated logic modules in such a manner that the number of constraining signals associated with the replicated logic cell is greater than the determined maximum number in order to force the placement and routing tool to place the replicated logic modules of the replicated logic cell in distinct zones of the surface of the FPGA.

2. A protection method according to claim 1, wherein the initial logic module is a flip-flop bistable and the replicated logic cell is a triple modular redundancy cell.

3. A protection method according to either preceding claim, wherein a first category of constraining signals is defined that comprises clock signals (H1, H2, H3).

4. A protection method according to any preceding claim, wherein a second category of constraining signals is defined that comprises reset signals (Rst1, Rst2, Rst3).

5. A protection method according to claims 3 and 4, wherein a distinct clock signal and a distinct reset signal are associated with each replicated logic module.

6. An FPGA in which there is implemented a protection method according to any preceding claim.

7. An FPGA according to claim 6, the FPGA comprising global buffers (12), row global buffers (13), and logic groups (11), each zone of the surface of the FPGA comprising one logic group, the FPGA being arranged in such a manner that global signals coming from the global buffers (12) are routed to the row global buffers (13), the global signals reaching the logic groups (11) by means of row global signals coming from the row global buffers (13).

8. An electric circuit card having mounted thereon an FPGA according to claim 6 or claim 7.

9. An inertial measurement unit including an electric circuit card according to claim 8.
